**Europäisches Patentamt**

**European Patent Office**

**Office européen des brevets**

(19)

(11) Veröffentlichungsnummer: **0 212 397 B1**

(12) **EUROPÄISCHE PATENTSCHRIFT**

(45) Veröffentlichungstag der Patentschrift:
07.11.90

(21) Anmeldenummer: 86110681.3

(22) Anmeldetag: 01.08.86

(51) Int. Cl.⁵: **B01J 2/16**, B01J 8/24,
B01F 13/02, A23G 3/20,
A23P 1/00, A61J 3/00

(54) **Fliessbettapparatur.**

(30) Priorität: **28.08.85 DE 3530744**

(43) Veröffentlichungstag der Anmeldung:
**04.03.87 Patentblatt 87/10**

(45) Bekanntmachung des Hinweises auf die Patenterteilung:
**07.11.90 Patentblatt 90/45**

(84) Benannte Vertragsstaaten:
**CH DE GB LI NL SE**

(56) Entgegenhaltungen:
**EP-A- 0 103 894**
**EP-A- 0 103 900**

(73) Patentinhaber: **Hüttlin, Herbert, Daimlerstrasse 7,
D-7853 Steinen(DE)**

(72) Erfinder: **Hüttlin, Herbert, Daimlerstrasse 7,
D-7853 Steinen(DE)**

(74) Vertreter: **Wuesthoff, Franz, Dr.-Ing. et al, Wuesthoff &
Wuesthoff Patent- und Rechtsanwälte
Schweigerstrasse 2, D-8000 München 90(DE)**

**Beschreibung**

Die Erfindung betrifft eine Fließbettapparatur zum Mischen, Trocknen, Granulieren, Pelletieren, Lackieren und/oder Dragieren pulvrigen oder körnigen Gutes mit

- einem Behälter, der in Bezug auf eine zumindest annähernd senkrechte Behälterachse zumindest annähernd rotationssymmetrisch ist und ein Unterteil mit nach unten abnehmendem Durchmesser hat,
- einer Schüssel, die in Bezug auf die Behälterachse zumindest annähernd rotationssymmetrisch ist und eine mindestens annähernd zylindrische Wand aufweist, in die das Unterteil des Behälters mündet,
- einem Tauchrohr, das von oben her axial in den Behälter hineinragt und in die Schüssel derart eintaucht, daß zwischen Tauchrohr und zylindrischer Wand der Schüssel ein enger Ringraum gebildet ist,
- und einem Abweisschirm, der in einem oberen Bereich des Behälters zumindest annähernd rotationssymmetrisch rings um das Tauchrohr angeordnet ist,
- wobei durch das Tauchrohr von oben her in die Schüssel eingeleitetes Gas von dieser nach oben umgelenkt wird, durch den Ringraum in den Behälter strömt und darin enthaltenes Gut bewegt, insbesondere fluidisiert, und das vom Gas weiter nach oben mitgenommene Gut vom Abweisschirm erneut umgelenkt wird.

Bei einer bekannten Fließbettapparatur dieser Gattung (EP-A-0103894) hat der enge Ringraum innerhalb der Schüssel einen mittleren Durchmesser, der erheblich kleiner als der mittlere Durchmesser des größten freien Ringquerschnitts des Behälters ist. Der aus dem Ringraum nach oben in den Behälter austretende Gasstrom reißt das Gut rings um das Tauchrohr nach oben mit, wird vom Abweisschirm nach außen umgelenkt und gelangt längs der nach unten konvergierenden Innenwand des Behälterunterteils wieder in die Nähe der Schüssel, von wo aus das Gut erneut rings um das Tauchrohr nach oben mitgerissen wird. Daraus ergibt sich eine gleichmäßige Umwälzung des im Behälter enthaltenen Gutes; diese Umwälzung nimmt bei ausreichender Strömungsgeschwindigkeit des Gases die Form einer vollständigen Fluidisierung des Gutes an.

Der Erfindung liegt die Aufgabe zugrunde, eine Wirbelschichtapparatur der beschriebenen Gattung derart weiterzubilden, daß sie eine noch gründlichere Durchmischung und Durchwirbelung des Gutes ermöglicht.

Die Aufgabe ist erfindungsgemäß dadurch gelöst, daß

- der Ringraum einen mittleren Durchmesser hat, der mindestens annähernd mit dem mittleren Durchmesser des größten freien Ringquerschnitts des Behälters zwischen Ringraum und Abweisschirm übereinstimmt, und
- der Abweisschirm den Ringraum mindestens annähernd symmetrisch überwölbt.

Damit wird erreicht, daß der in den Behälter eintretende Gasstrom und somit auch das von diesem mitgerissene Gut zwei gleichachsige, toroidförmige Wirbel bildet, nämlich einen inneren Wirbel, bei dem der Gasstrom und das mitgerissene Gut am Abweisschirm radial nach innen umgelenkt wird und rings um das Tauchrohr nach unten strömt, und einen äußeren Wirbel, der am Abweisschirm radial nach außen umgelenkt wird und an der Innenwand des Behälterunterteils entlang nach unten strömt. Im Bereich oberhalb des engen Ringraums treffen sich die beiden Wirbel wieder und auf dem gemeinsamen Weg nach oben kann ein begrenzter Austausch von Gutpartikeln zwischen den beiden Wirbeln stattfinden.

Bei einer bevorzugten Ausführungsform der Erfindung wird das bekannte Merkmal, daß der Abweisschirm nach unten hin konkav gewölbt ist, dadurch weitergebildet, daß zwei konzentrische ringförmige Gewölbe an der Unterseite des Abweisschirms eine ringförmige Rippe bilden, deren Durchmesser ebenfalls mindestens annähernd mit dem mittleren Druchmesser des größten freien Ringquerschnitts des Behälters übereinstimmt. Auf diese Weise wird eine besonders schonende Umlenkung der beiden Wirbel am Abweisschirm bewirkt.

Übereinstimmend mit der bekannten gattungsgemäßen Fließbettapparatur ist bei der erfindungsgemäßen Apparatur ein Gasauslaß vorzugsweise oberhalb des Abweisschirms angeordnet. In diesem Fall ist es erfindungsgemäß besonders vorteilhaft, wenn zwischen dem Abweisschirm und dem Tauchrohr einerseits sowie der Innenwand des Behälters andererseits zwei mindestens annähernd gleichgroße ringförmige Durchlässe freigelassen sind.

Die erfindungsgemäße Fließbettapparatur kann mit der bekannten gattungsgemäßen Apparatur ferner darin übereinstimmen, daß rings um das Tauchrohr mehrere Düsen zum Einsprühen von Flüssigkeiten und/oder Feststoffen in den Behälter angeordnet sind. In diesem Fall sind vorzugsweise gemäß einem weiteren Merkmal der Erfindung die Achsen der Düsen mindestens annähernd auf einem gedachten Zylindermantel mit einem Durchmesser gleich dem mittleren Durchmesser des größten freien Ringquerschnitts des Behälters angeordnet. Zweckmäßigerweise sind die Düsen innerhalb des Ringraumes angeordnet und parallel zur Behälterachse nach oben gerichtet.

In weiterer Übereinstimmung mit der bekannten gattungsgemäßen Fließbettapparatur kann das Tauchrohr eine äußere Mantelfläche mit einem sich nach unten erweiternden Abschnitt und einem unterhalb davon in die Schüssel eintauchenden, mindestens annähernd zylindrischen Abschnitt aufweisen. Diese Gestaltung kann erfindungsgemäß dadurch weitergebildet sein, daß der sich erweiternde Abschnitt ein trompetenartiges Profil hat, das im axialen Halbschnitt durch den Behälter zu dessen Unterteil mindestens annähernd symmetrisch verläuft. Auf diese Weise wird die erfindungsgemäß angestrebte Symmetrie der Profile der beiden gleichachsigen Wirbel weiter verbessert.

Ein Ausführungsbeispiel der Erfindung wird im folgenden anhand schematischer Zeichnungen mit weiteren Einzelheiten erläutert. Es zeigt:

Fig. 1 eine erfindungsgemäße Fließbettapparatur im senkrechten axialen Schnitt und
Fig. 2 den Querschnitt II-II in Fig. 1.

Die dargestellte Fließbettapparatur hat einen im wesentlichen kugelförmigen Behälter 10 und ist in bezug auf eine senkrechte Behälterachse 12 insgesamt im wesentlichen rotationssymmetrisch. Der Behälter 10 besteht aus einem Behälteroberteil 14 und einem Behälterunterteil 16, welche die Form je einer Kugelschalenzone haben, im wesentlichen aus Glas hergestellt sind und dichtend aneinanderliegende Flansche 18 und 20 aufweisen.

An das Behälteroberteil 14 schließt sich nach oben hin ein Behälteraufsatz 22 an, während das Behälterunterteil 16 nach unten hin in eine Schüssel 24 übergeht. Am Behälteraufsatz 22 und an der Schüssel 24 sind je zwei Bügel 26 bzw. 28 befestigt, die miteinander verspannt sind, beispielsweise durch übliche Übertotpunktverschlüsse oder ähnliche Schnellverschlüsse, die es ermöglichen, die Behälterteile 14 und 16 zum Reinigen rasch auseinanderzunehmen. Dabei bleibt entweder das Behälteroberteil 14 über den Behälteraufsatz 22 oder das Behälterunterteil 16 über die Schüssel 24 an einer nicht dargestellten Tragkonstruktion beliebiger Art abgestützt.

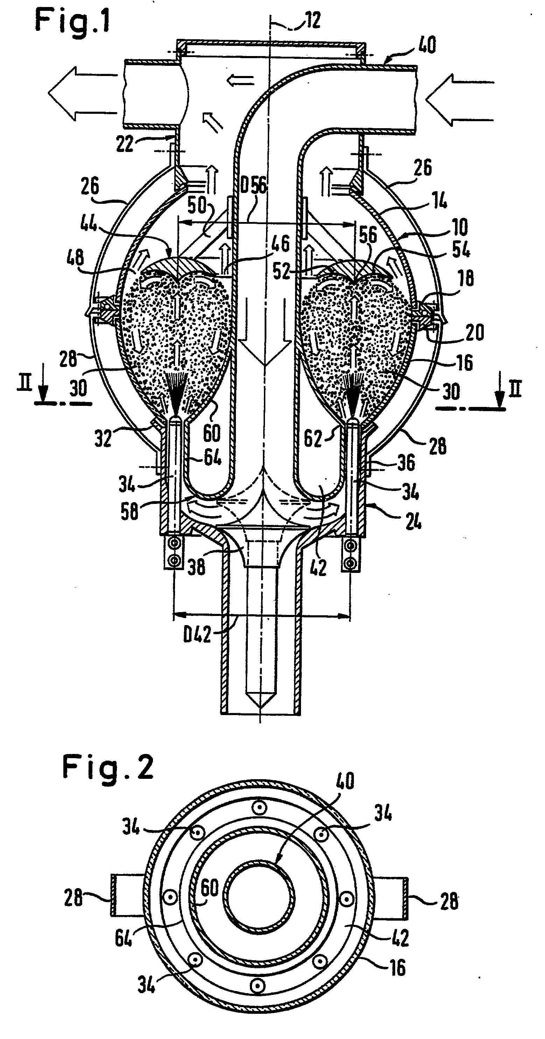

Der Behälter 10 enthält pulvriges oder körniges Gut 30, das gemischt oder getrocknet oder granuliert oder pelletiert oder lackiert oder dragiert oder einer Kombination zweier oder mehrerer dieser Vorgänge unterworfen wird. Das Gut 30 ist in Fig. 1 in einem fluidisierten Zustand dargestellt, der während des Betriebs der Apparatur eintritt.

Die Schüssel 24 hat einen nach außen ragenden oberen Rand 32, der den unteren Rand des Behälterunterteils 16 umschließt. In Höhe des oberen Randes 32 münden mehrere, im dargestellten Beispiel acht Düsen 34, die von unten her in die Schüssel 24 eingesetzt sind und sich parallel zur Behälterachse 12, im dargestellten Beispiel also senkrecht, nach oben erstrecken. Die Düsen 34 können zum Besprühen des Gutes 30 mit einer Flüssigkeit, beispielsweise Zuckerlösung, ausgebildet sein; sie können aber auch als Feststoffdüsen zum Einsprühen des Gutes 30 oder als Mehrstoffdüsen zum gleichzeitigen Einsprühen von Flüssigkeiten und/oder Feststoffen und/oder Gasen ausgebildet sein. In jedem Fall sind die Düsen 34 in gleichmäßigen Winkelabständen gegeneinander versetzt angeordnet.

An den oberen Rand 32 der Schüssel 24 schließt sich nach unten hin eine zylindrische Wand 36 an; auf diese folgt weiter unten ein Umlenkbereich, der teils von der Schüssel 24 selbst und teils von einem innerhalb der Schüssel höhenverstellbaren Verschlußkörper 38 gebildet ist. Der Verschlußkörper 38 ist wie die Schüssel 24 insgesamt rotationssymmetrisch und hat eine axial nach oben gerichtete Spitze.

In Fig. 1 ist der Verschlußkörper 38 mit vollen Linien in seiner Betriebsstellung gezeichnet, in der er die Schüssel 24 nach unten hin dicht abschließt. Aus dieser Stellung läßt sich der Verschlußkörper 38 in eine mit gestrichelten Linien angedeutete Öffnungsstellung anheben, in der das Gut 30 durch die Schüssel 24 hindurch nach unten abfließen kann.

Durch den Behälteraufsatz 22 hindurch ist ein Tauchrohr 40 bogenförmig nach innen geführt, das sich dann axial im Behälter 10 nach unten erstreckt, kurz vor dem Boden der Schüssel 24 endet und zusammen mit deren zylindrischer Wand 36 einen zylindrischen Ringraum 42 begrenzt. Das äußere Ende des Tauchrohrs 40 läßt sich an die Druckseite eines Gebläses anschließen, das Luft oder ein anderes Gas durch die Apparatur hindurchfördert. Das Gebläse gehört nicht zu der Wirbelschichtapparatur selbst, kann von üblicher Bauart sein und ist deshalb nicht dargestellt.

Innerhalb des Behälteroberteils 14 ist am Tauchrohr 40 ein ringförmiger Abweisschirm 44 befestigt, dessen Ränder in einer gemeinsamen, zur Behälterachse 12 normalen, im dargestellten Beispiel also waagerechten Ebene liegen und zwischen sich und dem Tauchrohr 40 einerseits sowie der Innenwand des Behälters 10 andererseits je einen ringförmigen Durchlaß 46 bzw. 48 freilassen. Die beiden Durchlässe 46 und 48 sind ungefähr flächengleich, sodaß im Betrieb ungefähr gleich große Gasmengen je Zeiteinheit radial innerhalb und außerhalb am Abweisschirm 44 vorbei nach oben in den Behälteraufsatz 22 strömen können, der an die Saugseite des Gebläses anschließbar ist.

Die Befestigung des Abweisschirms 44 am Tauchrohr 40 ist höheneinstellbar, sodaß sich das Flächenverhältnis zwischen den Durchlässen 46 und 48 verändern läßt; die Breite des inneren Durchlasses 46 ist von der Höheneinstellung unabhängig während die Breite des äußeren Durchlasses 48 mit zunehmender Höhe des Abweisschirms 44 abnimmt und umgekehrt. Die Befestigung des Abweisschirms 44 ist derart - im dargestellten Beispiel mit Speichen 50 - gestaltet, daß die Gasströmung durch den Durchlaß 46 nach oben nicht nennenswert behindert wird.

Die Unterseite des Abweisschirms 44 setzt sich aus zwei ringförmigen Gewölben 52 und 54 zusammen, die gemeinsam eine nach unten vorspringende ringförmige Rippe 56 bilden. Die gemeinsame Achse der beiden Gewölbe 52 und 54 und der Rippe 56 stimmt mit der Behälterachse 12 überein. Das Querschnittsprofil des Abweisschirms 44 ist in bezug auf die Rippe 56 symmetrisch.

Das Tauchrohr 40 hat im dargestellten Beispiel auf nahezu seiner gesamten Länge, bis etwa zu einer waagerechten Ebene, in der die Spitze des Verschlußkörpers 38 in dessen Schließstellung liegt, einen konstanten Durchmesser. In dieser Ebene geht das Tauchrohr 40 in einen Randwulst 58 über. Der Randwulst 58 hat einen oberen Abschnitt 60, der in der Äquatorialebene des Behälters 10 beginnt, dort einen mit dem Außendurchmesser des Tauchrohrs 40 übereinstimmenden Außendurchmesser hat und sich nach unten hin trompetenförmig erweitert bis zu einer ringförmigen Kante 62, die in der Höhe des unteren Randes des Behälterunterteils 16 liegt. An der Kante 62 beginnt ein zylindrischer Abschnitt 64 des Randwulstes 58, der den Ringraum 42 radial nach innen begrenzt.

Der Behälter 10 hat seinen größten freien Ringquerschnitt in der Äquatorialebene, in der die Flansche 18 und 20 aneinanderliegen. Dieser größte freie Ringquerschnitt hat einen mittleren Durchmesser, der sich als arithmetisches Mittel aus dem größten Innendurchmesser des Behälters 10 und dem Außendurchmesser des Tauchrohrs 40 ergibt. Der Ringraum 42 hat einen mittleren Durchmesser D42, der sich als arithmetisches Mittel aus dem Innendurchmesser der zylindrischen Wand 36 der Schüssel 24 und dem Außendurchmesser des zylindrischen Abschnittes 64 des Randwulstes 58 ergibt und genau mit dem mittleren Durchmesser des größten freien Ringquerschnitts des Behälters übereinstimmt. Ebensogroß ist der Durchmesser D56 der Rippe 56.

Im Betrieb saugt das erwähnte Gebläse Luft oder ein inertes Gas in erwärmtem, trockenem Zustand im Sinne der Pfeile in Fig. 1 durch die dargestellte Apparatur hindurch, wobei im Innenraum des Behälters ein Druck unter Umgebungsdruck herrschen kann. Durch die Düsen 34 werden gleichzeitig oder abwechselnd pulverförmige, feste und flüssige Stoffe eingesprüht. Diese Stoffe lagern sich an dem Gut 30 an, ehe sie irgendeine Wand der Apparatur erreichen; sie haben deshalb keine Gelegenheit, sich an der Innenwand des Behälters 10 oder am Tauchrohr 40 oder am Abweisschirm 44 anzulagern. Die dargestellte Apparatur eignet sich deshalb besonders gut zum Einsprühen von Stoffen, die sonst schwierig zu verarbeiten sind.

**Patentansprüche**

1. Fließbettapparatur zum Mischen, Trocknen, Granulieren, Pelletieren, Lackieren und/oder Dragieren pulvrigen oder körnigen Gutes mit
- einem Behälter (10), der in Bezug auf eine zumindest annähernd senkrechte Behälterachse (12) zumindest annähernd rotationssymmetrisch ist und ein Unterteil (16) mit nach unten abnehmendem Durchmesser hat,
- einer Schüssel (24), die in Bezug auf die Behälterachse (12) zumindest annähernd rotationssymmetrisch ist und eine mindestens annähernd zylindrische Wand (36) aufweist, in die das Unterteil (16) des Behälters (10) mündet,
- einem Tauchrohr (40), das von oben her axial in den Behälter (10) hineinragt und in die Schüssel (24) derart eintaucht, daß zwischen Tauchrohr (40) und zylindrischer Wand (36) der Schüssel (24) ein enger Ringraum (42) gebildet ist,
- und einem Abweisschirm (44), der in einem oberen Bereich des Behälters (10) zumindest annähernd rotationssymmetrisch rings um das Tauchrohr (40) angeordnet ist,
- wobei durch das Tauchrohr (40) von oben her in die Schüssel (24) eingeleitetes Gas von dieser nach oben umgelenkt wird, durch den Ringraum (42) in den Behälter (10) strömt und darin enthaltenes Gut (30) bewegt, insbesondere fluidisiert, und das vom Gas weiter nach oben mitgenommene Gut vom Abweisschirm (44) erneut umgelenkt wird,
dadurch **gekennzeichnet**, daß
- der Ringraum (42) einen mittleren Durchmesser (D42) hat, der mindestens annähernd mit dem mittleren Durchmesser des größten freien Ringquerschnitts des Behälters (10) zwischen Ringraum (42) und Abweisschirm (44) übereinstimmt, und

- der Abweisschirm (44) den Ringraum (42) mindestens annähernd symmetrisch überwölbt.

2. Fließbettapparatur nach Anspruch 1 mit nach unten hin konkav gewölbtem Abweisschirm (44), dadurch **gekennzeichnet**, daß zwei konzentrische ringförmige Gewölbe (52, 54) an der Unterseite des Abweisschirms (44) eine ringförmige Rippe (56) bilden, deren Durchmesser (D56) ebenfalls mindestens annähernd mit dem mittleren Durchmesser des größten freien Ringquerschnitts des Behälters (10) übereinstimmt.

3. Fließbettapparatur nach Anspruch 1 oder 2 mit einem Gasauslaß oberhalb des Abweisschirms (44), dadurch **gekennzeichnet**, daß zwischen dem Abweisschirm (44) und dem Tauchrohr (40) einerseits sowie der Innenwand des Behälters (10) andererseits zwei mindestens annähernd gleichgroße ringförmige Durchlässe (46, 48) freigelassen sind.

4. Fließbettapparatur nach einem der Ansprüche 1 bis 3, bei der rings um das Tauchrohr (40) mehrere Düsen (34) zum Einsprühen von Flüssigkeiten und/oder Feststoffen in den Behälter (10) angeordnet sind, dadurch **gekennzeichnet**, daß die Achsen der Düsen (34) mindestens annähernd auf einem gedachten Zylindermantel mit einem Durchmesser gleich dem mittleren Durchmesser des größten freien Ringquerschnitts des Behälters (10) angeordnet sind.

5. Fließbettapparatur nach Anspruch 4, dadurch **gekennzeichnet**, daß die Düsen (34) innerhalb des Ringraumes (42) angeordnet und parallel zur Behälterachse (12) nach oben gerichtet sind.

6. Fließbettapparatur nach einem der Ansprüche 1 bis 5, bei der das Tauchrohr (40) eine äußere Mantelfläche mit einem sich nach unten erweiternden Abschnitt (60) und einem unterhalb davon in die Schüssel (24) eintauchenden, mindestens annähernd zylindrischen Abschnitt (64) aufweist, dadurch **gekennzeichnet** daß der sich erweiternde Abschnitt (60) ein trompetenartiges Profil hat, das im axialen Halbschnitt durch den Behälter (10) zu dessen Unterteil (16) mindestens annähernd symmetrisch verläuft.

**Claims**

1. A fluidized bed apparatus for mixing, drying, granulating, pelleting, varnishing, and/or coating pulverous or granular material, comprising
– a vessel (10) which is at least approximately rotationally symmetrical with respect to an at least approximately vertical axis (12) of the vessel and includes a lower part (16) having a downwardly decreasing diameter,
– a dish (24) which is at least approximately rotationally symmetrical with respect to the axis (12) of the vessel and includes an at least approximately cylindrical wall (36) into which opens the lower part (16) of the vessel (10),
– an immersion tube (40) protruding axially from above into the vessel (10) and being immersed in the dish (24) such that a narrow annular space (42) is defined between the immersion tube (40) and the cylindrical wall (36) of the dish (24),

— and a diverting shield (44) arranged at least approximately rotationally symmetrically around the immersion tube (40) in an upper area of the vessel (10),
— gas introduced from above through the immersion tube (40) into the dish (24) being deflected upwardly by the same, flowing through the annular space (24) into the vessel (10) and moving material (30) contained therein, especially fluidizing the same, and the material entrained further in upward direction by the gas being deflected again by the diverting shield (44), characterized in that
— the annular space (42) has a mean diameter (D42) which conforms at least approximately to the mean diameter of (D42) which conforms at least approximately to the mean diameter of the maximum free ring cross section of the vessel (10) between the annular space (42) and the diverting shield (44), and
— the diverting shield (44) vaults at least approximately symmetrically over the annular space (42).

2. The fluidized bed apparatus as claimed in claim 1, comprising a downwardly concavely arched diverting shield (44), characterized in that two concentric, annular vaults (52, 54) at the underside of the diverting shield (44) form an annular rib (56) the diameter (D56) of which likewise conforms at least approximately to the mean diameter of the maximum free ring cross section of the vessel (10).

3. The fluidized bed apparatus as claimed in claim 1 or 2, characterized in that two annular passages (46, 48) at least approximately of the same size are left free between the diverting shield (44) and the immersion tube (40), on the one hand, and the inner wall of the vessel (10), on the other hand.

4. The fluidized bed apparatus as claimed in one or claims 1 to 3, with which a plurality of nozzles (34) are disposed around the immersion tube (40) to spray liquids and/or solids into the vessel (10), characterized in that the axes of the nozzles (34) are arranged at least approximately on an imaginary cylinder jacket having a diameter which corresponds to the mean diameter of the maximum free ring cross section of the vessel (10).

5. The fluidized bed apparatus as claimed in claim 4, characterized in that the nozzles (34) are arranged within the annular space (42) and directed upwardly parallel to the axis (12) of the vessel.

6. The fluidized bed apparatus as claimed in one of claims 1 to 5, with which the immersion tube (40) has an outer generated surface which comprises a downwardly flaring portion (60) and an at least approximately cylindrical portion (64) immersed into the dish (24) below said portion (60), characterized in that the flaring portion (60) has a trumpet-like profile extending at least approximately symmetrically with respect to the lower part (16) of the vessel (10) in the axial half section through the vessel (10).

**Revendications**

1. Appareil à lit fluidifié, destiné à mélanger, à sécher, à granuler, à transformer en boulettes, à enduire et/ou à transformer en dragées des matériaux pulvérulents ou granuleux, ledit appareil comportant

- un récipient (10) qui, par rapport à un axe de récipient (12) sensiblement vertical est sensiblement symétrique de révolution et comprend une partie inférieure (16) dont le diamètre va en diminuant dans une direction descendante,
- une cuve (24) qui, par rapport à l'axe de récipient (12), est sensiblement symétrique de révolution et a une parois (36) sensiblement cylindrique dans laquelle débouche la partie inférieure (16) du récipient (10),
- un tube plongeur (40) qui entre d'en haut et axialement dans le récipient (10) et pénètre dans la cuve (24) de telle manière qu'un espace annulaire serré (42) est formé entre le tube plongeur (40) et la parois cylindrique (36) de la cuve (24),
- et un écran déflecteur (44) qui, dans une partie supérieure du récipient (10), est disposé d'une manière sensiblement symétrique de révolution autour du tube plongeur (40),
- du gaz qui s'introduit d'en haut, en passant par le tube plongeur (40), dans la cuve (24), étant dévié par cette dernière vers le haut, ledit gaz passant par l'espace annulaire (42) dans le récipient (10) et mettant en mouvement, plus particulièrement en état fluidifié, du matériau (30) qui s'y trouve, et le matériau qui est entraîné vers le haut par le gaz étant de nouveau dévié par l'écran déflecteur (44), caractérisé en ce que
- l'espace annulaire (42) a un diamètre moyen (D42) qui est sensiblement coïncidant avec le diamètre moyen de la plus grande section droite annulaire libre du récipient (10) entre l'espace annulaire (42) et l'écran déflecteur (44), et
- que l'écran déflecteur (44) forme une voûte sensiblement symétrique qui recouvre l'espace annulaire (42).

2. Appareil à lit fluidifié selon la revendication 1, comportant un éran déflecteur (44) ayant une surface inférieure concave, caractérisé en ce que, dans la surface inférieure de l'écran déflecteur (44), deux voûtes annulaires concentriques (52, 54) forment une nervure annulaire (56) dont le diamètre (D56) est aussi sensiblement en coïncidence avec le diamètre moyen de la plus grande section droite annulaire libre du récipient (10).

3. Appareil à lit fluidifié selon la revendication 1 ou 2, comportant une sortie de gaz au-dessus de l'écran déflecteur (44), caractérisé en ce que, entre l'écran déflecteur (44) et le tube plongeur (40), d'une part, et la parois interne du récipient (10), de l'autre, deux passages annulaires (46, 48) de dimensions sensiblement égales sont laissés ouverts.

4. Appareil à lit fluidifié selon l'une quelconque des revendications 1 à 3, dans lequel, autour du tube plongeur (40), plusieurs buses (34) sont installées qui sont destinées à injecter des liquides et/ou des solides dans le récipient (10), caractérisé en ce que les axes des buses (34) sont sensiblement disposés sur une surface latérale imaginaire d'un cylindre ayant un diamètre égal au diamètre moyen de la plus grande section droite annulaire libre du récipient (10).

5. Appareil à lit fluidifié selon la revendication 4, caractérisé en ce que les buses (34) sont disposées à l'intérieur de l'espace annulaire (42) et sont dirigées vers le haut, parallèlement à l'axe de récipient (12).

6. Appareil à lit fluidifié selon l'une quelconque des revendications 1 à 5, dans lequel le tube plongeur (40) a une surface latérale extérieure comprenant une portion (60) qui va en s'élargissant vers le bas, et une portion (64) qui, en dessous de l'autre, descend dans la cuve (24) et est sensiblement cylindrique, caractérisé en ce que la portion (60) qui va en s'élargissant a un profil de trompette qui, dans la demi-section axiale coupant le récipient (10), est sensiblement symétrique par rapport à la partie inférieure (16) du récipient.

# Fig.1

# Fig.2